# EUROPEAN PATENT SPECIFICATION

(11) **EP 3 689 051 B1**
(45) Date of publication and mention of the grant of the patent: **27.07.2022**
(21) Application number: 17825860.4
(22) Date of filing: 22.12.2017
(51) Int. Cl.: H04W 56/00, H04W 84/12, H04W 84/20

(54) **DEVICE AND METHOD FOR USE IN WIRELESS COMMUNICATIONS**
VORRICHTUNG UND VERFAHREN ZUR VERWENDUNG IN DER DRAHTLOSEN KOMMUNIKATION
DISPOSITIF ET PROCÉDÉ DESTINÉS À ÊTRE UTILISÉS DANS DES COMMUNICATIONS SANS FIL

(43) Date of publication of application: 05.08.2020
(73) Proprietor: Huawei Technologies Co., Ltd., Longgang District Shenzhen, Guangdong 518129 (CN)
(72) Inventor: SHILO, Shimon, 80992 Munich (DE); EZRI, Doron, 80992 Munich (DE); WEITZMAN, Avi, 80992 Munich (DE); REDLICH, Oded, 80992 Munich (DE); TSODIK, Genadiy, 80992 Munich (DE)
(74) Representative: Maiwald Patent- und Rechtsanwaltsgesellschaft mbH
(86) International application number: PCT/EP2017/084290
(87) International publication number: WO 2019/120558

(56) References cited:
- US-A1- 2014 153 421
- US-A1- 2015 327 291
- US-A1- 2017 019 863

## Description

### BACKGROUND

The present invention, in some embodiments thereof, relates to a device, method and program product for use in wireless communications, more specifically in some embodiments, in one or more Wireless Local Area Networks (WLANs) in which a plurality of WLAN frames are to be respectively transmitted from different transmission addresses to different reception addresses.

In some wireless communication environments there may be one or more WLANs, each of which, or which collectively, service two or more WLAN devices, having different addresses that receive a respective two or more WLAN frames. The WLAN frames may be transmitted by WLAN devices that are each at different addresses. However, in many environments there may be mutual interference when such transmissions overlap in time, especially in cases where the transmitting and/or receiving WLAN devices are in relatively close proximity to each other.

Wi-Fi protocols (defined by the IEEE 802.11 suite of standards, herein referred to as 802.11) are popularly employed by many modern devices for WLAN communication. As Wi-Fi protocols are becoming used in increasingly dense environments, there has been an effort to establish flavors of the protocol, e.g. 802.11ax, that operate well in such environments. However, with transmissions being needed in increasingly dense environments, there remains a need for new ways of providing for spatial reuse.

US 2014/153421 A1 describes a method for optimization of branch synchronization node determination in a peer-to-peer network.

US 20157327291 A1 describes a method for increasing reuse in wireless communications.

### SUMMARY

It is an object of the present invention to provide an apparatus, a computer program product, and a method for communicating in environments in which a plurality of WLAN frames are to be respectively transmitted from different transmission addresses to different reception addresses. The present invention is defined by the appended claims and limited by the scope of the claims. Embodiments referred to in this description and not fully falling within the scope of the appended claims are examples suitable for understanding the present invention.

Unless otherwise defined, all technical and/or scientific terms used herein have the same meaning as commonly understood by one of ordinary skill in the art to which the invention pertains. Although methods and materials similar to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1A is a conceptual diagram of an exemplary wireless communications environment having of a plurality of WLAN devices configured to operate a method in accordance with an aspect of the present invention;
FIG. 1B depicts a frame format of an exemplary WLAN frame communicated in the method;
FIG. 2 is a conceptual block diagram that is depicting an exemplary architecture of a device configured to operate the method;
FIG. 3 is a conceptual block diagram of an exemplary processor that may be included in the device and is in accordance with an aspect of the invention;
FIG. 4 depicts an exemplary communication in which synchronization data in accordance with some embodiments of the present invention is transmitted;
FIG. 5 is depicts another exemplary communication in which synchronization data in accordance with some embodiments of the present invention is transmitted;
FIG. 6 is a swim lane diagram depicting an exemplary method in accordance with an aspect of the present invention; and
FIG. 7 is a swim lane diagram depicting another exemplary method in accordance with an aspect of the present invention.

### DETAILED DESCRIPTION

The present invention, in some embodiments thereof, relates to a device, method and program product for use in wireless communications, more specifically in some embodiments, in one or more WLANs in which a plurality of WLAN frames are to be respectively transmitted from different transmission addresses to different reception addresses.

The present inventors understand that previously in wireless local area network communications, when different devices (for example, but not necessarily) access points transmit WLAN frames addressed to different receivers, there is no synchronization in the transmissions of the WLAN frames. Each transmitting device operates the transmission independently of the other transmitting device, and this can lead to interference at any one of the receivers if they are in relatively close proximity to each other whereby the receivers receives both WLAN frames. They present inventors, however, have recognized that this mitigated can be solved by synchronizing transmission of the WLAN frames.

Thus, in general, non-limiting terms, synchronization information is determined for each of a plurality of OFDM signals in a respective plurality of WLAN frames. The WLAN frames are respectively transmitted from different transmission addresses, for example by different access points, and respectively define different reception addresses to be processed by different receivers, for example different end-user devices. A transmitted message or messages comprising the synchronization information configures a first device to transmit a first OFDM signal of said plurality of OFDM signals synchronously with a transmission, by a second device, of a second OFDM signal of said plurality of OFDM signals.

When the device has access to the transmission medium it sends the synchronization data to one or more other devices, including the first device, so that a the second OFDM signal, which is transmitted or received by the device, is "protected" from interference. The second OFDM signal is protected in the sense that, because of the synchronization, there can be mitigation of interference from any interfering OFDM signals transmitted from respective ones of the other devices.

In some embodiments the transmitting devices are in a common WLAN network. However, in other embodiments, they are in different WLAN networks. In any either case, in some embodiments the transmission of the synchronization data is a wireless transmission, such as in WLAN frame.

One potential advantageous of having synchronous transmission of the first and second OFDM signals, most beneficially where synchronization is in time, frequency and phase, is that synchronous transmission can potentially reduce interference between the two OFDM signals and therefore improve capacity for spatial reuse. This is because when a given one of the receivers receives both OFDM signals (i.e. the OFDM signal addressed to that receiver, and the OFDM addressed to the other receiver), signal components in the same frequencies may be summed and compensated for by the receiving device. For example, Minimum Variance Distortion-less Response (MVDR) can be used to estimate the spatial properties (direction) of the interferer (the transmitting device the transmitting the interfering signal) and to place a null on the signal coming from that direction.

Further, in the case of multiple interfering signals, the components of the interfering signal may be summed and treated as coming from and be treated as having come from a single spatial direction, thus making the null compensation much easier to implement, as only one direction needs to be nulled. Thus, while interference mitigation may be implemented in the case of a single interferer, there is a benefit is even more pronounced in the case of multiple interferers.

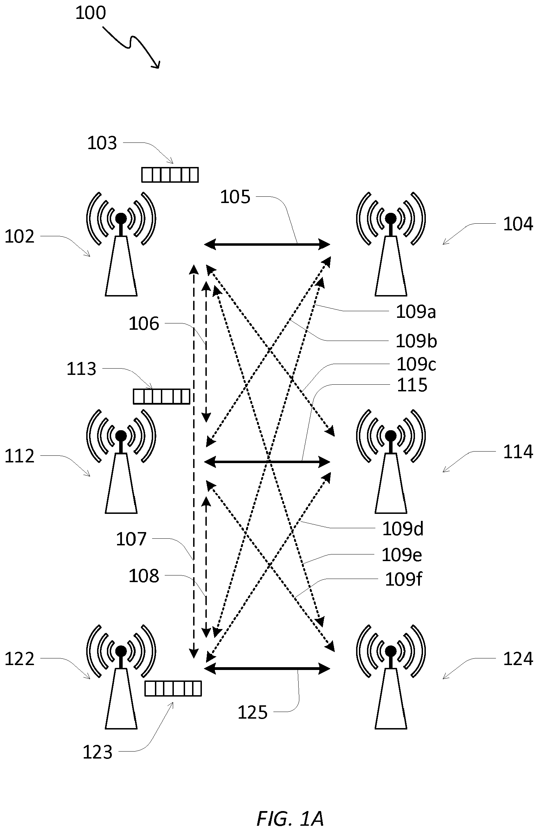

Referring now to the drawings, FIG. 1A illustrates an exemplary wireless communications environment 100, having of a plurality of WLAN devices 102, 104, 112, 114, 122, 124 configured to operate the exemplary embodiments of the present invention that are described herein. Each of the WLAN devices may be any WLAN-enabled computing device that may both transmit and receive information using a WLAN protocol, e.g. a Wi-Fi protocol. Thus, the WLAN devices may be any electronic device that includes hardware, and any associated software, for administering communication via the protocol(s). For example, the WLAN devices may be user equipment, a mobile station, a fixed or mobile subscriber unit, a pager, an access point, an LAN extender/repeater, a cellular telephone, a personal digital assistant, a smartphone, a laptop, a netbook, a personal computer, a tablet, a camera or consumer electronics, and the like. However, in the exemplary embodiment illustrated in FIG. 1A, each of the WLAN devices 102, 112, 122 on the left side of the page include, or are, a WLAN Access Point (AP), and therefore will hereinafter be referred to as APs. Each of the WLAN devices 104, 114, 124 on the right side of the page include, or are, a WLAN non-access point stations (STAs), and therefore will hereinafter be referred to as non-AP STAs.

APs 102, 114, 124 have different addresses, for example, different Media Access Control (MAC) addresses, from which respective WLAN frames 103, 113, 123 are transmitted. WLAN frames 103, 113, 123 include a receiver address field which defines different addresses, e.g. a MAC address, of respective non-AP STAs 104, 114, 124 for which the relevant WLAN frame is intended to be received, via a corresponding path 105, 115, 125 shown by solid arrows in FIG, 1. Each of the WLAN devices 102, 104, 112, 114, 122, 124 may be in a common WLAN network. However, in other embodiments, each the WLAN frames 103, 113, 123 are communicated over different WLAN networks, which may optionally operate different WLAN protocols, e.g. different 802.11 flavors. However, in any case, each of the APs 102, 112 and 122 can communicate with each of the other APs 102, 112, 122 using a common WLAN protocol, via paths 106, 107, 108 indicated by dashed lines in FIG. 1A.

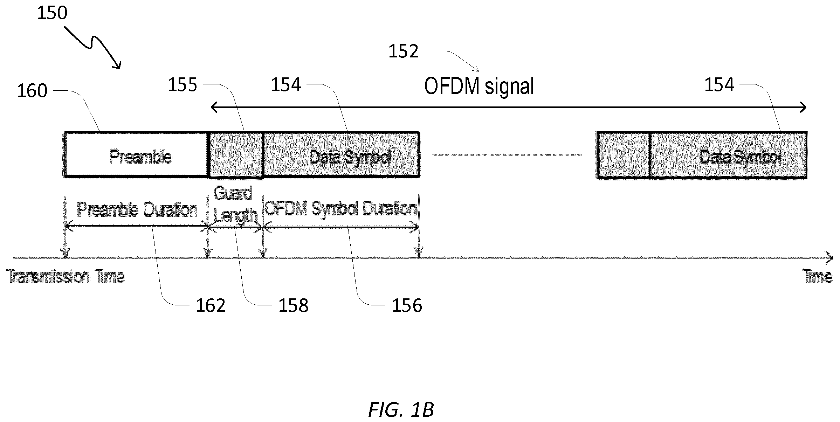

Transmission of the WLAN frames 103, 113, 123 follow not only the intended paths 105, 115 and 125, but also non-intended paths 109(a-f) indicated by dotted lines in FIG.1, to the non-APs 104, 114, 124 for which the WLAN frame is not addressed, and therefore has a potential to interfere with the WLAN frame intended for the non-AP STA. For example, some embodiments described herein address the problem that WLAN frame 113 and/or 123 may arrive at non-AP STA 104, even though they are not addressed to it, and their arrival may interfere with the reception of the frame 103 that is addressed to non-AP STA 104. Each of the non-AP STAs has N antennas operates an MVDR to estimate the direction of the path to interferer APs and place a null on signals coming from that direction. However, the transmissions of the WLAN frames 103, 113, 123 are synchronized, and this enables each receiver (non-AP STA), equipped with N antennas, to create up to N-1 nulls to thereby mitigate N-1 interferers. Such an MVDR technique is known in the art for mitigating multi-path interference from a single AP, whereby the multi-path signals can be mitigated provided they each arrive at the receiver within a cyclic prefix of an OFDM signal in the WLAN frame. However, the some embodiments of the present invention synchronize WLAN transmissions from different APs so that the OFDM signals of respective interfering WLAN frames arrive within the cyclic prefix, and can this be mitigated using the same MVDR processing.

An exemplary WLAN frame format 150 that may be used for each of WLAN frames 103, 113. 123 to synchronize each of the WLAN frames in accordance with embodiments of the present invention is illustrated in FIG. IB. In this example, the frame format includes an OFDM signal 152 comprised of multiple OFDM symbols 154. In the example illustrated in FIG. 1B, all of the OFDM symbols are marked as being data symbols, but in other embodiments an part of the OFDM signal, comprised of one or more of the OFDM symbols, is a part of the preamble. Each of the OFDM symbols have a common duration 156, and are separated by a cyclic prefix 155, each cyclic prefix having the same guard interval length (cyclic prefix duration) 18. In addition to including an OFDM signal, each of the WLAN frames is fronted by a WLAN preamble 160 have a preamble length 162, which may for example, be or include a WLAN legacy pre-amble that consists of Wi-Fi fields L-STF (legacy short training field), L-LTF (legacy long training field) and L-SIG (legacy signal field).

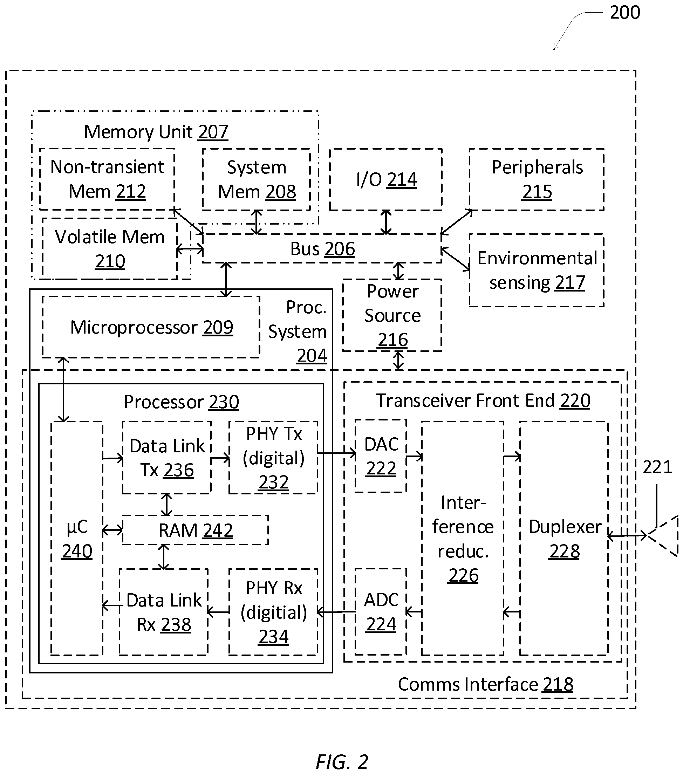

An exemplary architecture of a device 200 for performing an embodiment of one or more aspects of the present invention is illustrated in FIG. 2. The illustrated architecture of device 200 can be used for either or both of node devices 102, 104. The exemplary architecture is depicted as block diagram illustrating principal conceptual components of an exemplary device 200, and principal connections between those components, to aid a person skilled in the art in performing the invention. Components and connections that are not included in the illustration may therefore nonetheless be understood to be present by the person skilled in the art.

As has been discussed, the device 200 may include any necessary computer hardware that would be understood by the person skilled in the art to needed to perform the functions of the above listed any other possible types of computing nodes. In the illustrated embodiment, the device 200 has a processing system 204 having one or more processors / execution devices. The processing system 204 communicates data with at least one computer readable storage medium in the form of memory 207, via a communication bus 209. The memory 207 has a system memory 208, a volatile memory 210 and a tangible, non-transient memory 212. The system memory may have a read only memory (ROM) that stores a basic input/output system (BIOS). The volatile memory may have a random access memory (RAM), such as dynamic random access memory (DRAM). The non-transient memory 212 may have a hard disk drive(s), a solid state drive(s), and/or a flash memory device(s) and the like, and may store an operating system (e.g. Microsoft Windows, Apple OSX, Unix, and Linux) and/or other program products for running for operating device 200. The computer readable storage medium for providing the non-transient memory 212 may be, for example, but is not limited to, an electronic storage device, a magnetic storage device, an optical storage device, an electromagnetic storage device, a semiconductor storage device, or any suitable combination of the foregoing.

The processing system 204 includes a microprocessor 206 that performs tasks by executing software in the form of instructions and data stored on, and read from, the system, volatile, and/or non-transitory memory 208, 210, and 212. The tasks performed by the microprocessor can be some or all of the tasks that form various aspects of the present invention. The instructions are, at least upon powering up the device 200, stored in the non-transient memory 212 or an external data storage device accessed by the computer processing system 202 via an I/O interface 214. In some embodiments, the software may be provided to computer processing system 202 via a wired or wireless communication over a communications interface 218, which provides a network interface. Thus as will be appreciated, computer readable program instructions described herein may be downloaded to respective computing/processing devices from a computer readable storage medium or to an external computer or external storage device via a network, for example, a wireless local area network (e.g. Wi-Fi), a wide area network (e.g. the Internet), and/or a cellular network, e.g. Long-Term Evolution (LTE). The communications interface 218, in any case has a WLAN communications interface (such as WLAN transceiver), and may have additional communications connections, including but not limited to, BlueTooth, ZigBee, and 3G etc. Each of the communications connections may be via a transceiver front end 220 that drives antenna module has a series of antennas for providing beamforming and/or MVDR nulling.

The transceiver front end 220 includes analog components and mixed analog and digital signal components. The mixed analog and signal components include a digital to analog converter (DAC) 222 that generates RF signals from one or more instructions from the processing system 204. In some embodiments, the one or more instructions include one or more binary data streams to be converted to an analog signal by the DAC 222. The microcontroller 240 may, in some embodiments (not shown), also include one or more control signals to further instruct the transceiver front end 220, e.g. to be control the DAC, the duplexer 228 or an amplifier module (not shown). For example the FDD support of duplexer 228 may be switched off when FDD is not in operation.

The mixed analog and signal components include an analog to digital converter (ADC) 224 for converting received RF signals to digital form which are then processed by the processing system 204. The processing of the analog signal components are handled by an RF front end that includes an interference reduction module 226 that acts to minimize interference between the outbound signal from the DAC and the inbound signal to the ADC and a duplexer 228 for simultaneously sending and receiving signals to the antenna module 221 to support FDD on an antenna module 221 that is commonly employed for both transmitting and receiving RF signals. In other embodiments there is no duplexer 228 and FDD is supported by having different antenna modules can be used for transmitting and receiving signals.

Processing system 204 also includes a processor 230 that may be adapted to perform an embodiment of one or more aspects of the present invention. For example, in some embodiments the processor 230 is adapted to perform a method of the some embodiments of the present invention, for example by executing one or more tasks. In some embodiments, the tasks are provided in instructions stored in the non-transient memory 212. Thus, in some embodiments, the processor 230 may comprise electronic circuitry including, for example, programmable logic circuitry, field-programmable gate arrays (FPGA), or programmable logic arrays (PLA) that execute a computer readable program instructions by utilizing state information of the computer readable program instructions to personalize the electronic circuitry, in order to perform one or more aspects of the present invention.

The processor 230 generates digital instructions that it forwards to the transceiver front end, and the processor 230 receives the digital signal generated received by the transceiver front end 220. It is therefore convenient to herein refer to the processor 230 to as a transceiver back-end. In the context of the Open Systems Interconnection (OSI) of a telecommunication system, the processor operates digital aspects of the physical layer (PHY) of the OSI model, via digital PHY transmit module 232 and PHY receive module 234, operates the data link layer via data link transmit module 236 and data link receive module 238. In any case, in some embodiments the microcontroller 240 communicates with microprocessor 206 via a communications interface, such as SPI, SDIO, I²C, UART or GPIO. In some embodiments, at least a portion of the data link layer functions are performed by a microcontroller 240.

The processor 230 can include a RAM to enable data storage by the microcontroller 240, the transmit link modules 236, and the receive data link modules 238. Non-transient memory can also be included in the microcontroller 240 to configure the microcontroller's operation. In other embodiments the processor 230 adapted to perform an aspect of the present invention is an application-specific integrated circuit (ASIC) chip.

In other embodiments some or all of the functions of processor 230 may be integrated into microprocessor 206. It will therefore be appreciated by a person skilled in the art that the processor 230 may be a processing component of a larger processing chip / integrated circuit, or may be a stand-alone processing chip. Further, as will be appreciated by a person skilled in the art that the processor 230 may alternatively be distributed amongst multiple chips.

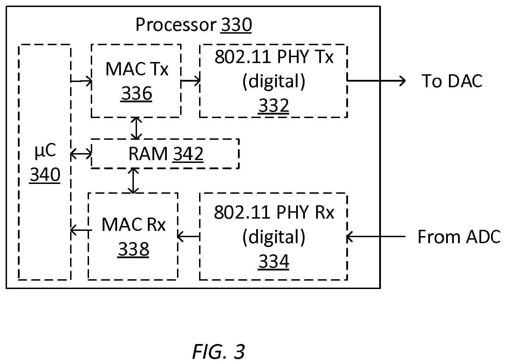

FIG. 3 illustrates an exemplary embodiment of a processor 330, which is an exemplary embodiment of processor 230 in which the processor 230 is adapted as the back-end (i.e. digital end) of a WLAN transceiver. Alternatively, the features of processor 330 may be incorporated into the processor 230 to provide the processor 230 with its WLAN functionality.

Features 232, 234, 236, 238, 240, 242 of processor 230 respectively correspond to features 332, 334, 336, 338, 340, 342, of processor 330. However, in processor 330 more specifically has a MAC transmit module 336 and MAC receive module 338 in place of the data link layer transmit and receive modules, respectively. A logical link control sublayer of the data link layer is included in microcontroller 330. The digital components of the PHY layer are provided by IEEE 802.11 compliant transmit and receive components 332 and 334, respectively.

In some embodiments, the MAC transmit module 336 generates a MAC layer protocol data unit (MDPU) that includes an aggregated MAC layer data unit in the form of aggregated MAC service data unit (A-MSDU), the A-MSDU having been generated in and received from the logical link control sublayer. The MAC transmit module forwards the MPDU to the PHY transmit component 332.

In other embodiments, the MAC transmit module 336 generates an aggregated MAC layer data unit in the form of an aggregated MAC protocol data unit (A-MPDU), which the MAC transmit module 336 then forwards to the digital PHY transmit component 332. Optionally, the A-MPDU can include one or more A-MSDUs.

The aggregated MAC layer data unit may be an A-MSDU or A-MPDU (including, but not limited to, A-MPDUs that incorporate an A-MSDU), but in exemplary embodiments described hereinafter is an A-MPDU.

The A-MPDU), or optionally a non-aggregated MAC protocol data unit (MPDU), is provided to the digital PHY transmit component 332. For exemplary embodiments illustrated hereinafter the PHY transmit component may be any OFDM based PHY component, and thus may be an IEEE 802.11 PHY component, such a PHY component of 802.11a, 802.11g, 802.1 In, 802.11ac, 802.11ax or future 802.11 technologies.

The digital PHY transmit component 332 receives a relevant data unit from the MAC transmit module 336, the received data unit being a PHY service data unit (PSDU). From the PSDU, the digital PHY transmit component 332 generates a PHY protocol data unit (PPDU) that includes a data component generated by a PHY data generator and a header generated by a PHY preamble generator.

A modulation and coding scheme is applied to each of a plurality of OFDM subcarriers having a defined bandwidth and being spread at difference frequencies that collectively span a total bandwidth of the PHY layer.

The total number of OFDM tones/subcarriers may, for example, be selected to be a set of 26, 52, 106, 242, 484 or 996 OFDM tones/subcarriers. In some embodiments, each subcarrier has a bandwidth of 78.125 kHz. In some embodiments, all of the subcarriers are be used to transmit to an OFDM signal in a given WLAN frame. In other embodiments only a portion of the subcarriers are used to transmit the OFDM signal, such a portion being known in that art a resource unit (RU).

The PHY data generator converts the coded and translated aggregated MAC layer data unit to the time domain by calculating an inverse Fast Fourier Transform (IFFT). The calculated signal is forwarded as a payload, with a PHY preamble, to the transceiver front end 220, which converts the calculated signal to an analog signal and drives transmission of the analog signal, as a frame, from antenna 221.

The PHY preamble is generated by the PHY preamble generator. In some embodiments, the preamble (PA) of the MPDU/A-MPDU payload is fronted by a legacy WLAN preamble, e.g. a Wi-Fi legacy preamble consisting of L-STF, L-LTF and L-SIG, with the L-SIG field defining a transmission time (duration) of the frame, and includes any protocol-dependent fields needed by the protocol.

Upon receiving a frame from another device, on antenna 221, the transceiver front end 220 filters the signal, performs interference reduction, including MVDR based interference reduction (or another interference reduction scheme) via module 226 and converts the signal to digital form via ADC 224 for processing by processor 330. The 802.11 digital PHY receiving component 334 performs an FFT, demodulates and decodes the received data, and performs forward error correction, before finally forwarding the data to the MAC receiving module 338 for higher level processing. In some embodiments the processor 330 operates according to IEEE 802.11ax, which may be as defined in IEEE standard Draft P802.11ax-D2.0, October 2017,. In accordance with IEEE 802.11ax, if a certain type of frame, called a "trigger frame" is received, the microcontroller 340 will instruct transmission of a frame, based on parameters in the trigger frame. In other embodiments, the trigger frame may be in accordance with the trigger frame defined in US patent application publication 2016/0165589 A1 (US'589), . In other embodiments, other trigger frame implementations may be employed.

In some embodiments the device 200 is for each of APs 102, 112, 122, whereby its transmitted signal is a downlink signal and its received signal is an uplink signal.

The non-AP STAs 104, 114, 124 may have the same architecture, but its transmitted signal to the AP is via an uplink transmission.

In addition to the functions described above, the device 200 may have a variety of other hardware elements. For example, in some embodiments it may be any network-enabled computing device (e.g. a laptop, router etc., as has been described). For example I/O interface 214 may include one or more of a speaker, microphone, keypad, display/touchscreen etc., which may be integrally incorporated into the device. Additionally the device may include a peripherals interface 215 to connect with one or more ancillary devices such as a mouse, keyboard, monitor, scanner, projector, digital camera etc. An environmental sensing system 217 may also be included to provide for example, temperature sensing, or a global positioning system or to measure any other condition of the device's environment. The device may also include an internal power source 219, such as a battery, which may be a rechargeable battery.

### Transmission of Synchronization Data

During operation a first one of APs (e.g. AP 112) and a second one of the APs (e.g. AP 122) receive synchronize data for synchronizing frames 113, 123. In addition to be synchronized with each other, the synchronization data also, in some embodiments, ensures that frames 113 and 123 are synchronized with a frame communicated with non-AP STA 104, e.g. frame 103. The synchronization data is transmitted in a frame addressed to both APs 112 and 122, via paths 106 and 107, respectively. Alternatively different synchronization frames may be transmitted to APs 112, 122, each being addressed to a corresponding one of the APs. In any case, the synchronization data to a given AP 112, 122 may be included in a single message (frame) or may be distributed amongst a plurality of messages.

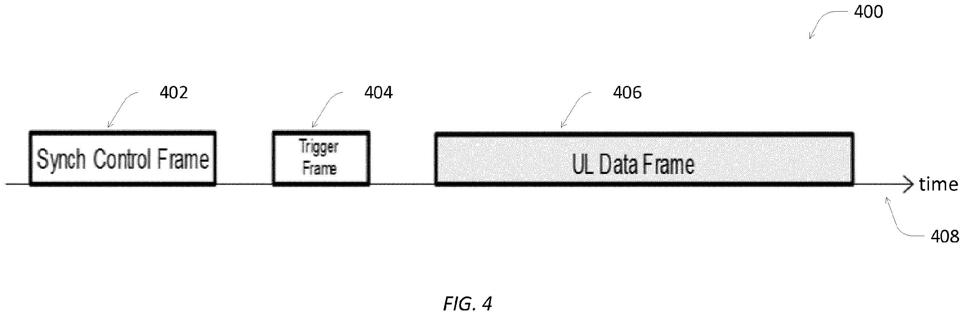

FIG. 4 illustrates an example of a communication 400 in which the synchronization data may be transmitted to APs 112, 112, in accordance with one or more embodiments of the present invention. The communication consists of series of frames 402, 404, 406 transmitted during a portion 408 of transmission opportunity period (TxOP) 400, such as a TxOP as defined in 802.11ax. Each of the frames are spaced by a short interframe spacing (SIFS) defined by the WLAN protocol with which it is communicated. The communication data is included in a synchronization control frame 402. The synchronization data provides information to APs 112 and 114 to ensure that OFDM signals in frames respectively transmitted from those APs is synchronized with an OFDM signal in an uplink frame 406 that is to be transmitted by non-AP STA 104. In some embodiments, an SIFS after transmitting the synchronization control frame the AP 102 transmits a downlink frame 103 with which frames 113 and 123 are to be synchronized. However, in other embodiments, the AP 102 does not transmit a frame to which transmission of frames 113 and 123 are synchronized, but instead, AP 102 receives a frame transmission to which transmission of frames 113 and 123 are synchronized.

In the embodiment shown in FIG. 4, an SIFS after transmitting the synchronization control frame the AP 102 transmits a trigger frame to non-AP STA 104 to configure the non-AP STA to transmit the uplink frame 406 at a specific time corresponding with timing information included in the synchronization data, and using OFDM symbols of a specific duration and separated by a specific cyclic prefix. The uplink frame 406 may thus have a format matching the format of WLAN frame 150. Thus, the OFDM signal of the uplink WLAN frame commences after a preamble portion of the frame. Although the non-AP STA 104 is transmitting rather than receiving, when frames 113 and 123 are being transmitted, the synchronization of the frames 406, 113, 123, still enables interference mitigation in the same manner at non-AP STA 104. Also, when the uplink frame 406 arrives at AP 102, there is potential for frames 113 and 123 to interfere with the reception of frame 406 at the AP 102. Thus the synchronization may additionally or alternatively be for interference mitigation at AP 102. In yet other embodiments the trigger frame and synchronization data is addressed to each of non-AP STAs 104, 114, 124, and uplink frames from non-AP STAs 114 and 124 are the synchronized according to uplink frame 406. The phase synchronization of the transmissions can be configured to produce zero phase difference at the transmitter or receiver of the frame 406, but in some embodiments is configured to produce zero phase difference at the receiver of the uplink frame 406, i.e. at AP 102.

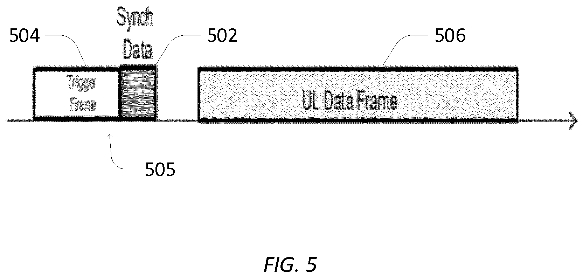

In another embodiment of the invention illustrated in FIG. 5, rather than having a synchronization control frame, synchronization data 502 may joined to an end (or other part) of a trigger frame 504 to form a synchronization and trigger frame 505. In such an embodiment, an uplink frame 506 follows the synchronization and trigger frame 505 by an SIFS.

For WLAN protocols in which the OFDM symbol duration and cyclic prefix duration are each configurable, the preamble duration, OFDM symbol duration and cyclic prefix duration are included in the synchronization data. These durations may be defined in the synchronization data in any unit of measurement(s) from which time may be extrapolated, for example, as an actual amount of time, or as a number of bits at a known bit rate. The synchronization data may also include a size of the WLAN frame.

In some implementations, however, the preamble duration, OFDM symbol duration, and/or cyclic prefix duration may be fixed and the same for all protocols used by the APs to communication with their corresponding non-AP STAs. For such implementations, the fixed one or more of the preamble duration, OFDM symbol duration and cyclic prefix duration need not be included in the synchronization control frame.

### Determination of synchronization parameters

A device addressed by the synchronization data determines synchronization parameters from the synchronization data. The synchronization parameters include transmission timing details. In embodiments where frequency, phase, and/or frame format details are variable, then any such variable parameters are also derived from the synchronization data. The following description assumes that each of these parameters is derived from the synchronization data.

The synchronization data includes transmission timing that indicates the common time with an error sufficiently small to synchronize the transmission of the OFDM signals within a cyclic prefix used by each of the OFDM signals. Ideally, the error is negligible (e.g. in some embodiment less than 10%; in some embodiment less than 5%; in some embodiments less than 1%; in some embodiments less than 0.5%) compared with the cyclic prefix so that it can maintain full effectiveness in its usual function, which is to minimize inter-symbol interference arising from multi-path signals from a given source.

The transmission timing is firstly determined by the AP 102 before it is transmitted. The transmission timing can be determined by scheduling commencement of transmitting each of the plurality of OFDM signals as a relative time with respect to a transmission trigger. The transmission timing comprises a transmission trigger, which for example can be a part of certain field or signal in a synchronization control frame. However, the time of the trigger event (the appearance of the trigger) is perceived differently by the device 102 that transmits the trigger and the devices 112, 114 that receive the trigger, for example due to a time of flight delay and any other delays. Thus the transmitting timing also includes a timing offset representing a difference between (i) a time associated with the transmission trigger, as perceived by the device 102, and (ii) the time associated with the transmission trigger, as perceived by the device 112. If the time will be perceived differently by device 122, then the timing offset defines that difference, as well. While the trigger event may be a common marker for each device, the nominal timing (prior to adjustment by the timing offset) may be some defined delay after the trigger event. For example, the device may send a trigger and identify (or it may be predefined) that the device 112 is to transmit its next frame 10 milliseconds after receiving the trigger, but each of devices 102, 112 and 122 experiences (e.g. identifies) the trigger as occurring at different times, which is corrected for by offset timing. Further, in some embodiments in which there is phase synchronization, a further offset may be used to remove any phase difference(s) between the interfering signal(s) and the desired signal transmitted or received by device 102, at the location of the desired signal's transmitter or receiver (whichever is location at which the interference is to be mitigated).

In alternative embodiments, rather than providing relative timing as described above, the synchronization data includes an actual time for commencing the transmitting each of the plurality of OFDM signals. An indication of the common time is provided and comprises a reference to the actual time with respect to a remote clock, such as a GPS clock. Optionally offset timing is also included in this case too, so that each device can correct for differences in interpretation of the time from the remote clock. Although depending on the implementation there may be no need for correction.

Using the synchronization data, OFDM subcarriers of the OFDM signals are also synchronized in a frequency domain. This can be achieved using any of a plurality of known techniques known by the person skilled in the art, whereby information is provided to the first device 112 so that the first device can adjust the frequencies of the OFDM subcarriers of the first ODFM signal to match the corresponding frequencies of the OFDM subcarriers of the second OFDM signal. Thus, the synchronization data may, for example, include a parameter that defines a previously determined difference in the respective oscillator frequencies from which the OFDM subcarriers are generated at the first device 112 and second device 102 or 104. In another example, synchronization data may include a data for enabling the second device to determine, in conjunction with other data and using a known technique, a difference in the respective oscillator frequencies from which the OFDM subcarriers are generated at the first and second devices.

Using the synchronization data, the OFDM symbols of the first OFDM signal are synchronized in phase with OFDM symbols of the second OFDM signal. The transmission of the signals is phase synchronized so that there is a zero phase angle between the corresponding OFDM subcarriers that carrier the OFDM symbols in the first and second OFDM signals, respectively, at a selected one of the transmitter or receiver of the second OFDM signal. The phase synchronization is based on phase synchronization data included in the synchronization data transmitted to the first device 112. The phase synchronization data may for example, represent a previously determined phase offset, using any one of a plurality of known techniques for determining phase difference between two transmitters and a receiver. For example a the phase difference can be determined from known joint transmission techniques in which the multiple sources transmit the same data to be received at the single receiver which require synchronization, e.g. using Coordinated Multi-Point (CoMP) technology. In another example, the phase synchronization data represents information which may be used by the first device 112, in conjunction with other data, to determine the phase difference using a known technique.

The synchronization data also includes format data identifying a duration of a preamble, a duration of each OFDM symbol in the OFDM signal, and duration of a cyclic prefix, each of which are common to the WLAN frames that are to be synchronized. A WLAN device that receives this frame format data as part of synchronization data will format the next WLAN frame according to the frame format data, thus synchronization at the start of the WLAN frame is maintained for entirety of the WLAN frame. Further the duration of the WLAN frames can also be set in the synchronization data, so that the synchronization can be maintained for any subsequent frames that occur a short interframe spacing after a first synchronized frame.

### Frame Synchronization Method

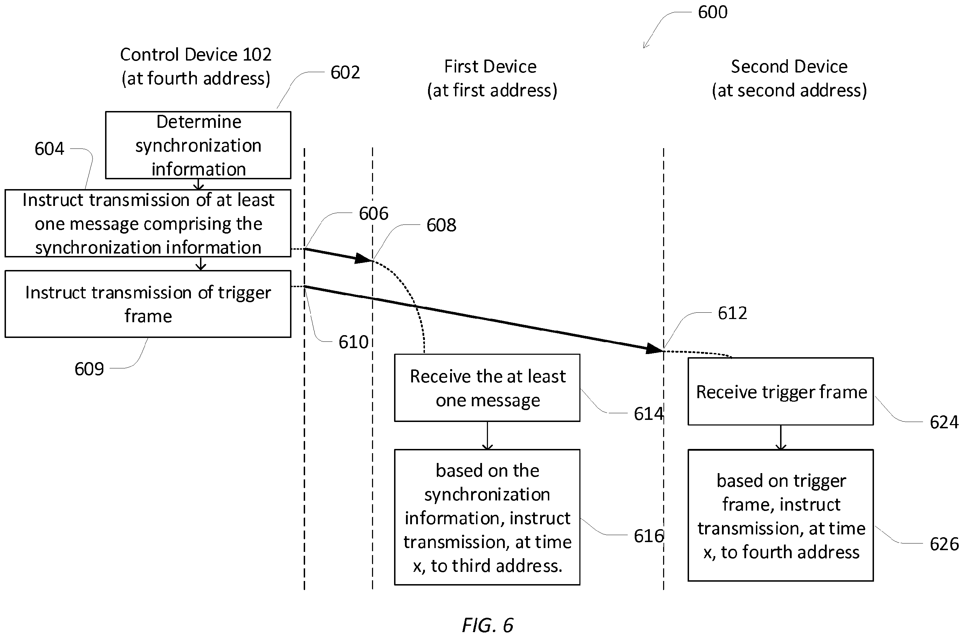

An exemplary method 600 for synchronizing WLAN frames in accordance with one or more embodiments of the present invention FIG. 6 is depicted as a swim lane diagram. At step 602, processor 330 of control device 102 determines synchronization information (data), as described above, for a future frame transmission. At step 604 the processor 330 of control device 102 instructs transmission of the synchronization information, e.g. using a synchronization control frame, or trigger and synchronization frame, as previously described herein. However, it for the purpose of explaining the FIG. 6 it will be assumed that the synchronization data is included in a synchronization control frame 402. At time step 606, a first synchronization control frame is transmitted at time. The synchronization control frame arrives at AP 112, at a first address, at time 608.

At step 609 the processor 330 of control device 102 instructs transmission of a trigger frame 404, which is transmitted by control device 102 at time 610 and arrives at non-AP STA 104, at a second address, at time 612.

Upon receiving synchronization control frame, at step 614, the AP 112 determines timing, frequency and phase parameters for synchronous transmission of its next frame transmission, which is to be addressed to non-AP STA 114 at a third address.

Upon receiving the trigger frame, at step 624, at step 626 the processor of non-AP STA 104 instructs transmission, from the non-AP STA 104, of an uplink frame 406 to the control device 102, the uplink transmission commencing a short interframe spacing after complete receipt of the trigger frame.

Meanwhile, at step 616 the processor of AP 112 instructs its transceiver front-end to transmit the frame 113 on subcarriers at frequencies dependent on the frequency parameters at a time depending on the timing parameter(s) to be at the same time the transmission of the uplink frame by the non-AP STA 104. However, rather than the respective transmissions being at precisely the same time of commencement of the transmission of the frame 113 is offset according to the phase parameters such that an OFDM signal in frame 113, although addressed to non-AP STA 114 and not control device 102, will nonetheless arrive at the control device 102 at the same time as an OFDM signal in frame 406, with the respective OFDM signals being in phase at control device 102.

In other embodiments (not shown), rather than sending a synchronization control frame to AP 112 at step 606 and a trigger frame to non-AP STA 104, the control device addresses and transmits a trigger and synchronization frame 506 to non-AP STAs 104 and 114. In the case the non-AP STA 104 behaves in the same way as the embodiment in which is receives a trigger frame. However, non-AP STA 114 is configured by the trigger and synchronization frame 506 to transmit an uplink frame to AP 112 synchronously with the transmission of an uplink frame 506 by non-AP STA 104.

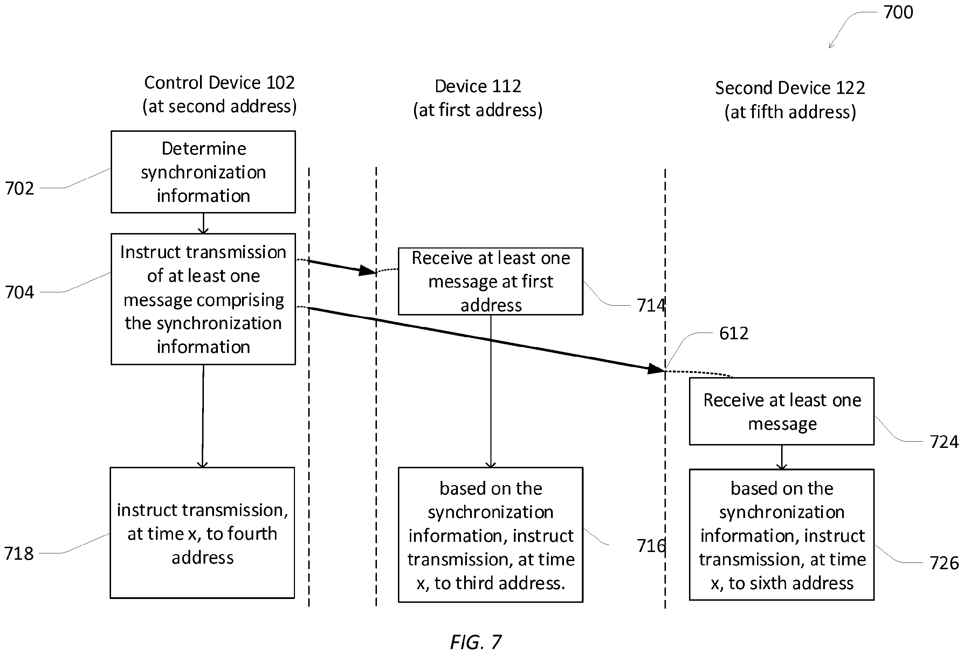

Another exemplary method 700 for synchronizing WLAN frames in accordance with some embodiments of the present invention FIG. 7 is depicted as another swim lane diagram. In this example the controlling AP device 102 determines synchronization information at step 702, in the same manner as step 602. At step 704, the processing system 330 of control device 102 instructs transmission of a synchronization control frame to device 112 at a first address. In steps 714 and 716 the AP 112 receives the synchronization data and instructs transmission of a frame 113 to a third address (corresponding to non-AP STA 114), according to timing, frequency and phase parameters based on the synchronization data. At step 718 control device 102 instructs transmission of a frame 103 to a fourth address (corresponding to non-AP STA 104). Like in the case of the example in FIG. 7, AP 122 at another address (a fifth address) also receives a synchronization control frame from the AP 112, at step 724 and instructs transmission of a frame 123 to a further address (a sixth address, corresponding to non-AP STA 124), according to timing, frequency and phase parameters based on the synchronization data. Each of frames 113 and 123 are transmitted to be synchronous in time, frequency and phase with the transmission of frame 103, whereby the frames 113 and 123 arrive at non-AP STA 104 at the same, time and frequency, and with their respective subcarriers in phase, with respect to the receipt of frame 103 at non-AP STA 104.

It is to be understood that the invention is not necessarily limited in its application to the details of construction and the arrangement of the components and/or methods set forth in the above description and/or illustrated in the drawings and/or the Examples. The invention is capable of other embodiments or of being practiced or carried out in various ways.

Embodiments of the present invention may be implemented as a system, a process, and/or a computer program product. The computer program product may include a computer readable storage medium (or media) having computer readable program instructions thereon for causing a processor to carry out aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

The terms "comprises", "comprising", "includes", "including", "having" and their conjugates mean "including but not limited to". This term encompasses the terms "consisting of" and "consisting essentially of".

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

## Claims

1. A device (102) comprising:
at least one processor adapted (330) to:
determine synchronization information for each of a plurality of orthogonal frequency duplex multiplexing, OFDM, signals (152) in a respective plurality of wireless local area network, WLAN, frames (103, 113, 123), the WLAN frames respectively being transmitted from different transmission addresses and respectively defining different reception addresses to be processed by different receivers (102, 112, 122); and
instruct transmission of at least one message (402, 505) comprising the synchronization information;
wherein the at least one message configures a first device (112) to transmit a first OFDM signal (113) of said plurality of OFDM signals synchronously with a transmission, by a second device (102 or 122), of a second OFDM signal (103 or 123) of said plurality of OFDM signals;
wherein OFDM sub carriers of the first OFDM signal are synchronized, in a frequency domain, to OFDM subcarriers of the second OFDM signal; and/or
wherein OFDM symbols of the first OFDM signal (113) are synchronized in phase with OFDM symbols of the second OFDM signal (103 or 123).

2. A device according to claim 1, wherein the synchronization information (502) comprises transmission timing for transmitting of each of the OFDM signals at a common time.

3. A device according to claim 2, wherein the transmission timing indicates the common time with an error sufficiently small to synchronize the transmission of the OFDM signals within a cyclic prefix (155) used by each of the OFDM signals.

4. The device according to claim 2 or 3, wherein determining the transmission timing comprises at least one of:
(i) scheduling commencement of transmitting each of the plurality of OFDM signals as a relative time with respect to a transmission trigger, wherein the transmission timing comprises:
the transmission trigger; and
a timing offset representing a difference between (i) a time associated with the transmission trigger, as perceived by the first device, and (ii) the time associated with the transmission trigger, as perceived by the second device; and
(ii) scheduling an actual time for commencing the transmitting each of the plurality of OFDM signals, wherein the indication of the common time comprises a reference to the actual time with respect to a remote clock.

5. A device according to any one of claims 1 to 4, wherein the synchronization information indicates a cyclic prefix (155) duration (156) and an OFDM symbol duration (158), to configure each of the OFDM signals to have OFDM symbols (154) having the OFDM symbol duration (156) and being spaced by the cyclic prefix (155).

6. The device according to any one of claims 1 to 5, wherein the at least one processor is further adapted to instruct said transmission of the second OFDM signal, and the synchronization information is included in at least one WLAN frame (402, 505) that precedes the plurality of WLAN frames (408) by at least a short inter-frame spacing, the short inter-frame spacing being defined by a WLAN protocol for the WLAN transmission, the at least one frame comprising at least one of:
a synchronization control frame (402); and
a trigger frame that configures (504) a WLAN transceiver to transmit a frame to the device, the transmission of the frame commencing at the common time.

7. The device according to any one of claims 1 to 6, wherein the at least one message further comprises format data identifying a duration (162) of a preamble (160) common to each of the WLAN frames.

8. The device according to any one of the preceding claims, wherein the at least one message is addressed to the first device (112) and third device (122), the third device being at a fifth address, wherein the at least one message configures the third device (122) to transmit a third OFDM signal (123), to a sixth address (124), synchronously with the transmission, by a second device (102), of the second OFDM signal (103).

9. A device (112) comprising:
at least one processor (330) adapted to:
receive at least one message (402) comprising:
synchronization information for each of a plurality of orthogonal frequency duplex multiplexing, OFDM, signals in a respective plurality of wireless local area network, WLAN, frames (103, 113, 123), the WLAN frames respectively being transmitted from different transmission addresses and respectively defining different reception addresses to be processed by different receivers (104, 114, 124); and
based on the synchronization information, instruct transmission of a first OFDM signal of said plurality of OFDM signals synchronously with a transmission, by a second device (102 or 122), of a second OFDM signal of said plurality of OFDM signals;
wherein OFDM sub carriers of the first OFDM signal are synchronized, in a frequency domain, to OFDM subcarriers of the second OFDM signal; and/or
wherein OFDM symbols of the first OFDM signal (113) are synchronized in phase with OFDM symbols of the second OFDM signal (103 or 123).

10. A method (600, 700) comprising:
determining synchronization information for each of a plurality of orthogonal frequency duplex multiplexing, OFDM, signals in a respective plurality of wireless local area network, WLAN, frames (103, 113, 123), the WLAN frames respectively being transmitted from different transmission addresses and respectively defining different reception addresses to be processed by different receivers (104, 114, 124); and
instructing transmission of at least one message (402, 505) comprising the synchronization information;
wherein the at least one message configures a first device (112) to transmit a first OFDM signal of said plurality of OFDM signals synchronously with a transmission, by a second device (102 or 122), of a second OFDM signal of said plurality of OFDM signals;
wherein OFDM sub carriers of the first OFDM signal are synchronized, in a frequency domain, to OFDM subcarriers of the second OFDM signal; and/or
wherein OFDM symbols of the first OFDM signal (113) are synchronized in phase with OFDM symbols of the second OFDM signal (103 or 123).

11. A method according to claim 10, wherein:
the synchronization information comprises transmission timing for transmitting of each of the OFDM signals at a common time;
OFDM subcarriers of the first OFDM signal are synchronized, in a frequency domain, to OFDM subcarriers of the second OFDM signal; and
OFDM symbols of the first OFDM signal are synchronized in phase with OFDM symbols of the second OFDM signal.

12. A method (600, 700) comprising:
receiving (614, 714) at least one message (402) comprising:
synchronization information for each of a plurality of orthogonal frequency duplex multiplexing, OFDM, signals in a respective plurality of wireless local area network, WLAN, frames, the WLAN frames (103, 113, 123) respectively being transmitted from different transmission addresses and respectively defining different reception addresses to be processed by different receivers (104, 114, 124); and
based on the synchronization information, instructing transmission of a first OFDM signal of said plurality of OFDM signals synchronously with a transmission, by a second device (102 or 122), of a second OFDM signal of said plurality of OFDM signals;
wherein OFDM subcarriers of the first OFDM signal are synchronized, in a frequency domain, to OFDM subcarriers of the second OFDM signal; and/or
wherein OFDM symbols of the first OFDM signal (113) are synchronized in phase with OFDM symbols of the second OFDM signal (103 or 123).

13. A computer program with a program code for performing a method according to any one of claims 10 to 12, when the computer program is executed by at least one processor (330).

## Patentansprüche

1. Vorrichtung (102), umfassend:
mindestens einen Prozessor, der ausgelegt ist (330), um:
Synchronisationsinformationen für jedes einer Vielzahl von orthogonalen Frequenzmultiplexsignalen, OFDM-Signalen (152) (OFDM = orthogonal frequency duplex multiplexing), in einer jeweiligen Vielzahl von Frames eines drahtlosen lokalen Netzwerks, WLAN-Frames (103, 113, 123), zu ermitteln, wobei die WLAN-Frames jeweils von unterschiedlichen Übertragungsadressen übertragen werden und jeweils unterschiedliche Empfangsadressen definieren, die durch unterschiedliche Empfänger (102, 112, 122) verarbeitet werden sollen; und
die Übertragung mindestens einer Nachricht (402, 505) anzuweisen, die die Synchronisationsinformationen umfasst;
wobei die mindestens eine Nachricht eine erste Vorrichtung (112) konfiguriert, um ein erstes OFDM-Signal (113) der Vielzahl von OFDM-Signalen synchron mit einer Übertragung eines zweiten OFDM-Signals (103 oder 123) der Vielzahl von OFDM-Signalen durch eine zweite Vorrichtung (102 oder 122) zu übertragen;
wobei OFDM-Unterträger des ersten OFDM-Signals in einer Frequenzdomäne mit OFDM-Unterträgern des zweiten OFDM-Signals synchronisiert sind; und/oder
wobei OFDM-Symbole des ersten OFDM-Signals (113) mit OFDM-Symbolen des zweiten OFDM-Signals (103 oder 123) phasensynchronisiert sind.

2. Vorrichtung nach Anspruch 1, wobei die Synchronisationsinformationen (502) eine Übertragungszeitsteuerung zum Übertragen eines jeden der OFDM-Signale zu einer gemeinsamen Zeit umfassen.

3. Vorrichtung nach Anspruch 2, wobei die Übertragungszeitsteuerung die gemeinsame Zeit mit einem Fehler angibt, der ausreichend klein ist, um die Übertragung der OFDM-Signale innerhalb eines zyklischen Präfixes (155) zu synchronisieren, das durch jedes der OFDM-Signale verwendet wird.

4. Vorrichtung nach Anspruch 2 oder 3, wobei das Ermitteln der Übertragungszeitsteuerung mindestens eines umfasst aus:
(i) Planen des Beginns des Übertragens eines jeden der Vielzahl von OFDM-Signalen als relative Zeit in Bezug auf einen Übertragungsauslöser, wobei die Übertragungszeitsteuerung umfasst:
den Übertragungsauslöser; und
einen Zeitsteuerungsversatz, der eine Differenz zwischen (i) einer Zeit, die dem durch die erste Vorrichtung wahrgenommenen Übertragungsauslöser zugeordnet ist, und (ii) der Zeit darstellt, die dem durch die zweite Vorrichtung wahrgenommenen Übertragungsauslöser zugeordnet ist; und
(ii) Planen einer tatsächlichen Zeit zum Beginnen des Übertragens eines jeden der Vielzahl von OFDM-Signalen, wobei die Angabe der gemeinsamen Zeit eine Bezugnahme auf die tatsächliche Zeit in Bezug auf eine entfernte Uhr umfasst.

5. Vorrichtung nach einem der Ansprüche 1 bis 4, wobei die Synchronisationsinformationen eine Dauer (156) eines zyklischen Präfixes (155) und eine Dauer (158) eines OFDM-Symbols angeben, um jedes der OFDM-Signale so zu konfigurieren, dass es OFDM-Symbole (154) aufweist, die die OFDM-Symboldauer (156) aufweisen und durch das zyklische Präfix (155) beabstandet sind.

6. Vorrichtung nach einem der Ansprüche 1 bis 5, wobei der mindestens eine Prozessor ferner ausgelegt ist, um die Übertragung des zweiten OFDM-Signals anzuweisen, und die Synchronisationsinformationen in mindestens einem WLAN-Frame (402, 505) enthalten sind. der der Vielzahl von WLAN-Frames (408) um mindestens einen kurzen Zwischenframe-Abstand vorausgeht, wobei der kurze Zwischenframe-Abstand durch ein WLAN-Protokoll für die WLAN-Übertragung definiert ist, wobei der mindestens eine Frame mindestens eines umfasst aus:
einem Synchronisationssteuerframe (402); und
einem Auslöserframe, der einen WLAN-Transceiver konfiguriert (504), um einen Frame zu der Vorrichtung zu übertragen, wobei die Übertragung des Frames zu der gemeinsamen Zeit beginnt.

7. Vorrichtung nach einem der Ansprüche 1 bis 6, wobei die mindestens eine Nachricht ferner Formatdaten umfasst, die eine Dauer (162) einer Präambel (160) kennzeichnen, die jedem der WLAN-Frame gemeinsam ist.

8. Vorrichtung nach einem der vorhergehenden Ansprüche, wobei die mindestens eine Nachricht an die erste Vorrichtung (112) und an die dritte Vorrichtung (122) adressiert ist, wobei sich die dritte Vorrichtung an einer fünften Adresse befindet, wobei die mindestens eine Nachricht die dritte Vorrichtung (122) konfiguriert, um synchron mit der Übertragung des zweiten OFDM-Signals (103) durch eine zweite Vorrichtung (102) ein drittes OFDM-Signal (123) zu einer sechsten Adresse (124) zu übertragen.

9. Vorrichtung (112), umfassend:
mindestens einen Prozessor (330), der ausgelegt ist, um:
mindestens eine Nachricht (402) zu empfangen, umfassend:
Synchronisationsinformationen für jedes einer Vielzahl von orthogonalen Frequenzmultiplexsignalen, OFDM-Signalen, in einer jeweiligen Vielzahl von Frames eines drahtlosen lokalen Netzwerks, WLAN-Frames (103, 113, 123), wobei die WLAN-Frames jeweils von unterschiedlichen Übertragungsadressen übertragen werden und jeweils unterschiedliche Empfangsadressen definieren, die durch unterschiedliche Empfänger (104, 114, 124) verarbeitet werden sollen; und
auf der Grundlage der Synchronisationsinformationen die Übertragung eines ersten OFDM-Signals der Vielzahl von OFDM-Signalen synchron mit einer Übertragung eines zweiten OFDM-Signals der Vielzahl von OFDM-Signalen durch eine zweite Vorrichtung (102 oder 122) anzuweisen;
wobei OFDM-Unterträger des ersten OFDM-Signals in einer Frequenzdomäne mit OFDM-Unterträgern des zweiten OFDM-Signals synchronisiert sind; und/oder
wobei OFDM-Symbole des ersten OFDM-Signals (113) mit OFDM-Symbolen des zweiten OFDM-Signals (103 oder 123) phasensynchronisiert sind.

10. Verfahren (600, 700), umfassend:
Ermitteln von Synchronisationsinformationen für jedes einer Vielzahl von orthogonalen Frequenzmultiplexsignalen, OFDM-Signalen, in einer jeweiligen Vielzahl von Frames eines drahtlosen lokalen Netzwerks, WLAN-Frames (103, 113, 123), wobei die WLAN-Frames jeweils von unterschiedlichen Übertragungsadressen übertragen werden und jeweils unterschiedliche Empfangsadressen definieren, die durch unterschiedliche Empfänger (104, 114, 124) verarbeitet werden sollen; und
Anweisen der Übertragung mindestens einer Nachricht (402, 505), die die Synchronisationsinformationen umfasst;
wobei die mindestens eine Nachricht eine erste Vorrichtung (112) konfiguriert, um ein erstes OFDM-Signal der Vielzahl von OFDM-Signalen synchron mit einer Übertragung eines zweiten OFDM-Signals der Vielzahl von OFDM-Signalen durch eine zweite Vorrichtung (102 oder 122) zu übertragen;
wobei OFDM-Unterträger des ersten OFDM-Signals in einer Frequenzdomäne mit OFDM-Unterträgern des zweiten OFDM-Signals synchronisiert sind; und/oder
wobei OFDM-Symbole des ersten OFDM-Signals (113) mit OFDM-Symbolen des zweiten OFDM-Signals (103 oder 123) phasensynchronisiert sind.

11. Verfahren nach Anspruch 10, wobei:
die Synchronisationsinformationen eine Übertragungszeitsteuerung zum Übertragen eines jeden der OFDM-Signale zu einer gemeinsamen Zeit umfassen;
OFDM-Unterträger des ersten OFDM-Signals in einer Frequenzdomäne mit OFDM-Unterträgern des zweiten OFDM-Signals synchronisiert sind; und
OFDM-Symbole des ersten OFDM-Signals mit OFDM-Symbolen des zweiten OFDM-Signals phasensynchronisiert sind.

12. Verfahren (600, 700), umfassend:
Empfangen (614, 714) mindestens einer Nachricht (402), umfassend:
Synchronisationsinformationen für jedes einer Vielzahl von orthogonalen Frequenzmultiplexsignalen, OFDM-Signalen, in einer jeweiligen Vielzahl von Frames eines drahtlosen lokalen Netzwerks, WLAN-Frames, wobei die WLAN-Frames (103, 113, 123) jeweils von unterschiedlichen Übertragungsadressen übertragen werden und jeweils unterschiedliche Empfangsadressen definieren, die durch unterschiedliche Empfänger (104, 114, 124) verarbeitet werden sollen; und
auf der Grundlage der Synchronisationsinformationen Anweisen der Übertragung eines ersten OFDM-Signals der Vielzahl von OFDM-Signalen synchron mit einer Übertragung eines zweiten OFDM-Signals der Vielzahl von OFDM-Signalen durch eine zweite Vorrichtung (102 oder 122);
wobei OFDM-Unterträger des ersten OFDM-Signals in einer Frequenzdomäne mit OFDM-Unterträgern des zweiten OFDM-Signals synchronisiert sind; und/oder
wobei OFDM-Symbole des ersten OFDM-Signals (113) mit OFDM-Symbolen des zweiten OFDM-Signals (103 oder 123) phasensynchronisiert sind.

13. Computerprogramm mit einem Programmcode zum Durchführen eines Verfahrens nach einem der Ansprüche 10 bis 12, wenn das Computerprogramm durch mindestens einen Prozessor (330) ausgeführt wird.

## Revendications

1. Dispositif (102) comprenant :
au moins un processeur conçu (330) pour :
déterminer des informations de synchronisation pour chacun d'une pluralité de signaux de multiplexage avec duplex en fréquence orthogonale, OFDM, (152) dans une pluralité respective de trames de réseau local sans fil, WLAN, les trames WLAN (103, 113, 123) étant respectivement transmises à partir de différentes adresses de transmission et définissant respectivement différentes adresses de réception à traiter par différents récepteurs (102, 112, 122) ; et
ordonner la transmission d'au moins un message (402, 505) comprenant les informations de synchronisation ;
dans lequel l'au moins un message configure un premier dispositif (112) pour transmettre un premier signal OFDM (113) de ladite pluralité de signaux OFDM de manière synchrone avec une transmission, par un deuxième dispositif (102 ou 122), d'un second signal OFDM (103 ou 123) de ladite pluralité de signaux OFDM ;
dans lequel les sous-porteuses OFDM du premier signal OFDM sont synchronisées, dans un domaine fréquentiel, avec les sous-porteuses OFDM du second signal OFDM ; et/ou
dans lequel les symboles OFDM du premier signal OFDM (113) sont synchronisés en phase avec les symboles OFDM du second signal OFDM (103 ou 123).

2. Dispositif selon la revendication 1, dans lequel les informations de synchronisation (502) comprennent un temps de transmission pour transmettre chacun des signaux OFDM à une heure commune.

3. Dispositif selon la revendication 2, dans lequel le temps de transmission indique l'heure commune avec une erreur suffisamment faible pour synchroniser la transmission des signaux OFDM dans un préfixe cyclique (155) utilisé par chacun des signaux OFDM.

4. Dispositif selon la revendication 2 ou 3, dans lequel la détermination du temps de transmission comprend au moins un élément parmi :
(i) la planification du début de la transmission de chacun de la pluralité de signaux OFDM en tant qu'heure relative par rapport à un déclencheur de transmission, dans lequel le temps de transmission comprend :
le déclencheur de transmission ; et
un décalage temporel représentant une différence entre (i) une heure associée au déclencheur de transmission, telle que perçue par le premier dispositif, et (ii) l'heure associée au déclencheur de transmission, telle que perçue par le deuxième dispositif ; et
(ii) la planification d'une heure réelle pour débuter la transmission de chacun de la pluralité de signaux OFDM, dans lequel l'indication de l'heure commune comprend une référence à l'heure réelle par rapport à une horloge distante.

5. Dispositif selon l'une quelconque des revendications 1 à 4, dans lequel les informations de synchronisation indiquent une durée (156) de préfixe cyclique (155) et une durée de symbole OFDM (158), pour configurer chacun des signaux OFDM afin d'avoir des symboles OFDM (154) ayant la durée (156) de symbole OFDM et étant espacé par le préfixe cyclique (155).

6. Dispositif selon l'une quelconque des revendications 1 à 5, dans lequel l'au moins un processeur est en outre conçu pour ordonner ladite transmission du second signal OFDM, et les informations de synchronisation sont incluses dans au moins une trame WLAN (402, 505) qui précède la pluralité de trames WLAN (408) d'au moins un court espacement inter-trames, le court espacement inter-trames étant défini par un protocole WLAN pour la transmission WLAN, l'au moins une trame comprenant au moins un élément parmi :
une trame de commande de synchronisation (402) ; et
une trame de déclenchement qui configure (504) un émetteur-récepteur WLAN pour transmettre une trame au dispositif, la transmission de la trame commençant à l'heure commune.

7. Dispositif selon l'une quelconque des revendications 1 à 6, dans lequel l'au moins un message comprend en outre des données de format identifiant une durée (162) d'un préambule (160) commun à chacune des trames WLAN.

8. Dispositif selon l'une quelconque des revendications précédentes, dans lequel l'au moins un message est adressé au premier dispositif (112) et au troisième dispositif (122), le troisième dispositif étant à une cinquième adresse, dans lequel l'au moins un message configure le troisième dispositif (122) pour transmettre un troisième signal OFDM (123), à une sixième adresse (124), de manière synchrone avec la transmission, par un deuxième dispositif (102), du second signal OFDM (103).

9. Dispositif (112) comprenant :
au moins un processeur (330) conçu pour :
recevoir au moins un message (402) comprenant :
des informations de synchronisation pour chacun d'une pluralité de signaux de multiplexage avec duplex en fréquence orthogonale, OFDM, dans une pluralité respective de trames de réseau local sans fil, WLAN, (103, 113, 123), les trames WLAN étant respectivement transmises à partir de différentes adresses de transmission et définissant respectivement différentes adresses de réception à traiter par différents récepteurs (104, 114, 124) ; et
sur la base des informations de synchronisation, le fait d'ordonner la transmission d'un premier signal OFDM de ladite pluralité de signaux OFDM de manière synchrone avec une transmission, par un deuxième dispositif (102 ou 122), d'un second signal OFDM de ladite pluralité de signaux OFDM ;
dans lequel les sous-porteuses OFDM du premier signal OFDM sont synchronisées, dans un domaine fréquentiel, avec les sous-porteuses OFDM du second signal OFDM ; et/ou
dans lequel les symboles OFDM du premier signal OFDM (113) sont synchronisés en phase avec les symboles OFDM du second signal OFDM (103 ou 123).

10. Procédé (600, 700) comprenant :
la détermination des informations de synchronisation pour chacun d'une pluralité de signaux de multiplexage avec duplex en fréquence orthogonale, OFDM, dans une pluralité respective de trames de réseau local sans fil, WLAN, les trames WLAN (103, 113, 123) étant respectivement transmises à partir de différentes adresses de transmission et définissant respectivement différentes adresses de réception à traiter par différents récepteurs (104, 114, 124) ; et le fait d'ordonner la transmission d'au moins un message (402, 505) comprenant les informations de synchronisation ;
dans lequel l'au moins un message configure un premier dispositif (112) pour transmettre un premier signal OFDM de ladite pluralité de signaux OFDM de manière synchrone avec une transmission, par un deuxième dispositif (102 ou 122), d'un second signal OFDM de ladite pluralité de signaux OFDM ;
dans lequel les sous-porteuses OFDM du premier signal OFDM sont synchronisées, dans un domaine fréquentiel, avec les sous-porteuses OFDM du second signal OFDM ; et/ou
dans lequel les symboles OFDM du premier signal OFDM (113) sont synchronisés en phase avec les symboles OFDM du second signal OFDM (103 ou 123).

11. Procédé selon la revendication 10, dans lequel :
les informations de synchronisation comprennent un temps de transmission pour transmettre chacun des signaux OFDM à une heure commune ;
les sous-porteuses OFDM du premier signal OFDM sont synchronisées, dans un domaine fréquentiel, avec les sous-porteuses OFDM du second signal OFDM ; et
les symboles OFDM du premier signal OFDM sont synchronisés en phase avec les symboles OFDM du second signal OFDM.

12. Procédé (600, 700) comprenant :
la réception (614, 714) d'au moins un message (402) comprenant :
des informations de synchronisation pour chacun d'une pluralité de signaux de multiplexage avec duplex en fréquence orthogonale, OFDM, dans une pluralité respective de trames de réseau local sans fil, WLAN, (103, 113, 123), les trames WLAN étant respectivement transmises à partir de différentes adresses de transmission et
définissant respectivement différentes adresses de réception à traiter par différents récepteurs (104, 114, 124) ; et
sur la base des informations de synchronisation, le fait d'ordonner la transmission d'un premier signal OFDM de ladite pluralité de signaux OFDM de manière synchrone avec une transmission, par un deuxième dispositif (102 ou 122), d'un second signal OFDM de ladite pluralité de signaux OFDM ;
dans lequel les sous-porteuses OFDM du premier signal OFDM sont synchronisées, dans un domaine fréquentiel, avec les sous-porteuses OFDM du second signal OFDM ; et/ou
dans lequel les symboles OFDM du premier signal OFDM (113) sont synchronisés en phase avec les symboles OFDM du second signal OFDM (103 ou 123).

13. Programme informatique avec un code de programme pour exécuter un procédé selon l'une quelconque des revendications 10 à 12 lorsque le programme informatique est exécuté par au moins un processeur (330).
